# EUROPEAN PATENT APPLICATION

(11) **EP 3 330 029 A1**
(43) Date of publication of application: **06.06.2018**
(21) Application number: 16830135.6
(22) Date of filing: 18.05.2016
(51) Int. Cl.: B23K 1/00, B23K 1/19, B23K 1/20, B23K 31/02, B23K 35/22, B23K 35/28, C22C 21/00, B23K 101/14, B23K 103/10

(54) **METHOD FOR PRODUCING ALUMINUM STRUCTURE**

(30) Priority: 29.07.2015 JP 2015149694
(71) Applicant: UACJ Corporation, Tokyo 100-0004 (JP)
(72) Inventor: ITOH Yasunaga, Tokyo 100-0004 (JP); YANAGAWA Yutaka, Tokyo 100-0004 (JP); YAMAYOSHI Tomoki, Tokyo 100-0004 (JP); NINOMIYA Junji, Tokyo 100-0004 (JP); YANAGIMOTO Tsubasa, Tokyo 100-0004 (JP)
(74) Representative: Kramer Barske Schmidtchen Patentanwälte PartG mbB
(86) International application number: PCT/JP2016/064778
(87) International publication number: WO 2017/018030

(57) **Abstract**

A manufacturing method is provided in which, in an aluminum structure comprising a hollow structure and a tubular member, robust fillets can be formed easily on both an outer surface and an interior surface of the hollow structure. A clad sheet is prepared that: has a multi-layer structure comprising a core composed of an aluminum material, a first filler material composed of an Al-Si alloy, and a second filler material composed of an Al-Si alloy having a solidus temperature of 570°C or less; and contains, in at least one layer of the multi-layer structure, an element that breaks down an oxide film. A tubular member (3) is prepared that is composed of an aluminum material. A hollow structure (2) is manufactured from the clad sheet, the outer-surface side of the hollow structure is composed of the first filler material and the hollow structure has a through hole (211). The aluminum structure (1) is assembled in which the tubular member (3) is inserted into the through hole (211) and an end part of the tubular member (3) is disposed in the interior of the hollow structure (2). A brazing process is performed in which the aluminum structure (1) is heated in an inert-gas atmosphere, and thereby the hollow structure (2) and the tubular member (3) are joined.

## Description

### TECHNICAL FIELD

The present invention relates to a method of manufacturing an aluminum structure comprising a hollow structure and a tubular member that is inserted into the hollow structure.

### BACKGROUND ART

Aluminum materials have various advantages such as high thermal conductivity and lightweightness. Consequently, studies have been actively carried out in recent years to make parallel-flow-type heat exchangers, which are incorporated in air conditioners, automobiles, and the like, of aluminum (e.g., Patent Document 1).

As exemplified by a parallel-flow-type heat exchanger, an aluminum structure, which comprises a hollow structure having a through hole and a tubular member inserted into the through hole, is normally manufactured by brazing the hollow structure and the tubular member. As a method of brazing the aluminum structure, so-called flux-brazing methods are often used in which brazing is performed by using a filler material composed of an Al-Si (aluminum-silicon) alloy, applying a fluoride-based flux onto the filler material, and then heating the object to be processed in a nitrogen gas atmosphere. The filler material is provided on an interior surface and an outer surface of the hollow structure and, depending on the situation, may be provided also on an outer surface of the tubular member.

However, in flux-brazing methods, if the flux application amount is insufficient, then there is a risk that oxide films present on the surfaces of the aluminum materials to be brazed will be insufficiently broken down. As a result, this will lead to a decrease in brazeability and, depending on the situation, there is a risk that brazing failures will occur.

In addition, in a heat exchanger, for example, there is a process in which the outer surface of the aluminum structure is subject to a surface treatment; in this process, the cost of the operation of washing off flux residue using an acid or the like is viewed as a problem. Furthermore, in recent years, there has been a strong demand to significantly reduce the size and weight of heat exchangers, particularly heat exchangers for automobiles; in accordance with this, coolant passageways in the interior of the heat exchanger are being miniaturized. Consequently, the problem arises in which, after brazing is performed, the coolant passageways become clogged by flux residue.

In addition, there is a problem in that fluoride-based fluxes used in flux-brazing methods react with and are consumed by Mg (magnesium) contained in the aluminum material, which leads to a degradation of brazeability. Consequently, in flux-brazing methods, the brazing of high-strength materials containing Mg is difficult. In addition, because high-strength materials cannot be used, there is a limit to the reduction of the thickness of the aluminum material and, in turn, to the reduction in the weight of the aluminum structure.

Accordingly, so-called fluxless-brazing methods have been proposed in which Mg or the like, which functions to break down the oxide films, is added to the filler material, and brazing is performed in an inert-gas atmosphere without using flux. For example, in Patent Document 2, a method is proposed in which brazing is performed without flux in a nonoxidative-gas atmosphere using an Al-Si-Mg alloy filler material.

### PRIOR ART LITERATURE

### Patent Documents

Patent Document 1
   Japanese Laid-open Patent Publication 2012-67994
Patent Document 2
   Japanese Laid-open Patent Publication H11-285817

### SUMMARY OF THE INVENTION

### PROBLEMS TO BE SOLVED BY THE INVENTION

However, fluxless-brazing methods have a problem in that, compared with flux-brazing methods, the quality of the brazed joints tends to degrade depending on: the shape, the structure, and the like of the object to be processed, and the location at which the brazed joint is formed. For example, if the hollow structure and the tubular member are brazed using a fluxless-brazing method, then there is a problem in that the filler produced by the heating is drawn into the interior of the hollow structure, and therefore fillets tend not to be formed on the outer surface of the hollow structure. There is a risk that the occurrence of fillet tearings or the like on the outer surface of the hollow structure will become a problem from the standpoint of external appearance, which is not preferable.

To improve brazeability in fluxless-brazing methods, methods are also conceivable in which the oxygen concentration, the dew point, or the like is decreased to increase the purity of an inert gas, or else high purity argon gas is used as the inert gas. However, in these methods, there are problems from the standpoint of productivity and cost in addition to the effect of forming fillets on the outer surface of the hollow structure being insufficient; therefore, it is problematic to apply these methods in mass-production facilities.

In addition, at the joint between the hollow structure and the tubular member, it is necessary to make the size of the through hole, through which the tubular member is inserted, slightly larger than the tubular member. Consequently, a certain amount of clearance is formed between the outer surface of the tubular member and the hollow structure. Methods are also being studied to improve brazeability by precisely controlling this clearance; however, the same as discussed above, it is problematic to apply the above-mentioned methods on an industrial scale owing to the problems in the brazeability improvement effect, productivity, and cost.

The phenomenon of the filler being drawn into the interior of the hollow structure is conceivably caused by, for example, the following mechanism. In fluxless-brazing methods, brazing progresses by an element or elements-such as Mg added to the filler material, the core, or the like-breaking down the oxide films present on the surfaces of the filler material and the opposing material. During the interval from when heating starts until the filler material begins melting, Mg and the like diffuses within the solid filler material and migrates to the surface. Consequently, during the interval until the filler material begins to melt, the breakdown of the oxide film of the filler material advances slowly, and the oxide film of the opposing material scarcely breaks down at all.

Immediately after the filler material has begun to melt, the oxide films of both the filler material and the opposing material are not sufficiently broken down. Consequently, the formation of the fillets progresses slowly.

At this time, in the interior of the hollow structure, the amount of oxygen in the atmosphere decreases owing to the oxidation of the inner surface, etc. of the hollow structure. In addition, it is difficult for the atmosphere to flow from the exterior space into the interior of the hollow structure. As a result, thereof, the oxygen concentration of the atmosphere in the interior of the hollow structure is lower than in the exterior space. Consequently, the oxide film(s) present in the interior of the hollow structure breaks down faster than in the oxide film(s) present outside of the hollow structure. As a result, the filler material present in the interior of the hollow structure can flow sooner than the filler material present on the exterior, and therefore fillets are formed precedently in the interior of the hollow structure, that is, for example, on the interior surfaces of join parts between the tubular member and the hollow structure.

When the melting of the filler material further progresses and the filler on the outer surface of the hollow structure becomes capable of flowing, the state results in which the interior and the exterior of the hollow structure are connected via the filler. For that reason, the filler on the outer surface is drawn into the interior of the hollow structure, and therefore it becomes difficult for fillets to form on the outer surface of the hollow structure.

In addition to the problem of stably forming a satisfactory brazed joint as discussed above, there are significant limitations on usable materials, brazing equipment, and the like in the brazing of an aluminum structure using a fluxless-brazing method. Consequently, an example in which brazing of aluminum structures using a fluxless-brazing method has continued over a long term on an industrial scale has not existed up to now. However, a fluxless-brazing method could solve problems with flux-brazing methods, in which it is difficult: to be able to avoid the adverse effects of flux-induced clogging, flux residue, and the like, to be able to avoid the occurrence of brazing failures due to coating unevenness of the flux, to be able to use high-strength materials, to be able to decrease the thickness of the aluminum material, etc. Consequently, there is a strong demand to put a fluxless-brazing method into practical use.

The present invention considers this background, and it is an object of the present invention to provide a manufacturing method in which, in an aluminum structure comprising a hollow structure and a tubular member, robust fillets can be formed easily on both an outer surface and an interior surface of the hollow structure.

### MEANS FOR SOLVING THE PROBLEMS

One aspect of the present invention is an aluminum-structure manufacturing method comprising:
preparing a clad sheet that: has a multi-layer structure comprising a core composed of an aluminum material, a first filler material composed of an Al-Si alloy and disposed on one side of the core, and a second filler material composed of an Al-Si alloy containing at least one of Cu and Zn and having a solidus temperature of 570°C or less, and that is disposed on the other side of the core, and contains, in at least one layer of the multi-layer structure, an element that breaks down an oxide film;
preparing a tubular member composed of an aluminum material;
manufacturing a hollow structure from the clad sheet, the outer-surface side of the hollow structure being composed of the first filler material and the hollow structure having a through hole into which the tubular member is inserted;
assembling the aluminum structure in which the tubular member is inserted into the through hole and an end part of the tubular member is disposed in the interior of the hollow structure; and
performing a brazing process in which the aluminum structure is heated in an inert-gas atmosphere, and thereby the hollow structure and the tubular member are joined.

### EFFECTS OF THE INVENTION

In the above-mentioned aluminum-structure manufacturing method, the hollow structure is manufactured such that the first filler material is disposed on the outer-surface side and the second filler material is disposed on the interior-surface side. As described above, the second filler material has a solidus temperature in the above-mentioned specific range. Consequently, when the brazing process of the aluminum structure begins, the filler originating from the second filler material can flow before the first filler material does. As a result, the filler originating from the second filler material is supplied to the join part(s) present in the interior of the hollow structure, and thereby the fillets are formed.

On the other hand, the filler originating from the first filler material accumulates on the outer surface of the hollow structure until the fillet(s) is (are) formed at the join part(s) in the interior of the hollow structure, and therefore can flow after the fillet(s) is (are) are formed on the interior-surface side. As a result, it becomes difficult for the filler originating from the first filler material to be drawn into the interior of the hollow structure. In addition, because the filler that originates from the first filler material can be supplied to the join part(s) present on the outer surface of the hollow structure, the fillet(s) can be formed easily on the outer surface of the hollow structure.

As a result of the above, in the above-mentioned manufacturing method, robust fillets can be formed easily on both the outer and interior surfaces at the join parts between the hollow structure and the tubular member.

In addition, in the above-mentioned manufacturing method, the aluminum structure prior to the brazing process is made into the above-mentioned specific configuration as described above, and thereby robust fillets can be formed on both surfaces of the hollow structure. Consequently, compared with a method in which the atmosphere is controlled during brazing and the clearance between the tubular member and the hollow structure is controlled, the cost is low and furthermore it is highly effective at forming a robust fillet on the outer surface.

The above-mentioned manufacturing method can also be applied to any application, as long as it is an aluminum structure having a hollow structure and a tubular member, and can be applied particularly suitably to a parallel-flow-type heat exchanger installed in an air conditioner, an automobile, or the like.

### BRIEF DESCRIPTION OF THE DRAWINGS

FIG. 1 is an oblique view that shows the principal parts of a test specimen that mimics a parallel-flow-type heat exchanger according to a working example.
FIG. 2 is a cross-sectional view of the principal parts of the test specimen according to the working example.
FIG. 3 is an enlarged view that shows, in a cross-sectional view taken along line III-III of FIG. 2, a join part between a hollow structure and a tubular member, and a join part between the hollow structure and a separator.
FIG. 4 is an enlarged view that shows a join part between a header part and a tank part in FIG. 2.

### MODES FOR CARRYING OUT THE INVENTION

In the above-mentioned aluminum-structure manufacturing method, "aluminum materials" that constitute the core and the tubular member may be pure aluminum or may be an aluminum alloy.

In addition, the tubular member may be an extruded shape, such as, for example, an extruded tube or an extruded multi-hole tube, or may be a shaped plate material in which an aluminum plate has been formed into a tube shape. A filler material may be layered on an outer surface of the extruded shape. In addition, the shaped plate material can also be manufactured from a brazing sheet, in which the core and the filler material are layered.

A clad sheet constituting the hollow structure has a multi-layer structure that includes the core, the first filler material, and the second filler material. That is, the clad sheet may be a three-layer clad sheet in which filler materials are disposed on both surfaces of the core, or may be a multi-layer clad sheet of four or more layers in which an intermediate material, which has a chemical composition that differs from that of the core and filler materials, is disposed between the core and a filler material.

In addition, the clad sheet contains, in at least one layer of the multi-layer structure, an element that breaks down oxide films. Thereby, fluxless brazing can be implemented. For example, Mg (magnesium), Li (lithium), Be (beryllium), Ba (barium), Ca (calcium), and the like are examples of elements that break down oxide films.

It is not required that these elements are included in all layers included in the multi-layer structure as long as the configuration is one in which the elements can be eluted into the filler as described below. For example, if Mg or the like is included in the core, then Mg or the like need not be included in the first filler material, the second filler material, the intermediate material, etc. On the other hand, if Mg or the like is included in the first filler material or the intermediate material between the first filler material and the core, then the Mg or the like diffuses as far as the second filler material, and therefore it is difficult for the Mg or the like to diffuse into the filler. For that reason, in this case, it is necessary that the second filler material or the core contains Mg or the like.

The core may be composed of an aluminum alloy having a chemical composition that contains Mg: 0.2%-1.3% (mass%; likewise, hereinbelow), the remainder being composed of Al and unavoidable impurities. In the brazing process, Mg contained in the core elutes into the filler originating from the first filler material and the filler originating from the second filler material. For that reason, oxide films present on the surfaces of the hollow structure, the tubular member(s), and the like can be broken down by the Mg that has eluted from the core. As a result, robust fillets can be formed more easily.

If the Mg content is less than 0.2%, then there is a risk that the effect of breaking down the oxide films will become insufficient. On the other hand, if the Mg content is more than 1.3%, then, during the brazing process, there is a risk that a phenomenon called "erosion," in which the filler permeates the core, will occur and consequently brazeability will decrease. In addition, in this situation, by increasing the amount of Mg that elutes into the filler, there is a risk that the surface tension of the filler will decrease, which will lead to a decrease in the ability to form the fillets.

The first filler material may be composed of an aluminum alloy having a chemical composition that indispensably contains Si: 6%-13% and further contains one or two or more selected from the group consisting of Mg: 0.2%-1.2%, Li: 0.004%-0.1%, Be: 0.004%-0.1%, and Ca: 0.005%-0.03%, the remainder being composed of Al and unavoidable impurities. By setting the Si content to the above-mentioned specific range, a sufficient amount of the filler can be supplied to the join part(s) present on the outer surface of the hollow structure, and thereby brazeability can be improved.

In addition, by setting the Mg, Li, Be, and Ca contents to the above-mentioned specific ranges, these elements are caused to elute into the filler in the brazing process, and thereby the oxide films present at the join part(s) can be broken down. As a result, robust fillets can be easily formed.

If the Si content in the first filler material is less than 6%, then there is a risk that a problem will arise in which the amount of filler produced in the brazing process becomes insufficient, the fluidity of the filler decreases, or the like. As a result, there is a risk that this will lead to a decrease in brazeability. On the other hand, if the Si content is more than 13%, then there is a risk that the filler will flow excessively. In addition, in this situation, cracks tend to occur during the rolling of the first filler material.

If the Mg, Li, Be, and Ca contents are below the above-mentioned specific ranges, then there is a risk that the effect of breaking down the oxide films will become insufficient. On the other hand, if these element contents exceed the above-mentioned specific ranges, then there is a risk that sturdy oxide films originating from the Mg or the like will be formed on the first filler material, which will lead to a decrease in brazeability.

The aluminum alloy that constitutes the first filler material may further contain Bi (bismuth): 0.004%-0.2%. By Bi being present in the filler, surface tension decreases; as a result, brazeability can be improved. If the Bi content is less than 0.004%, then the effect of decreasing the surface tension will become insufficient. In addition, if the Bi content is more than 0.2%, then cracks tend to occur during rolling of the first filler material. Furthermore, in this situation, there is a risk that the surface tension of the filler will decrease excessively and, worse yet, the ability to form fillets will decrease.

The second filler material is composed of an Al-Si alloy that contains at least one among Cu and Zn and has a solidus temperature of 570°C or less. By setting the solidus temperature of the second filler material to the above-mentioned specific range, the filler originating from the second filler material can be caused to flow before the filler originating from the first filler material flows, and therefore a fillet can be formed first at a join part present on the interior side of the hollow structure. As a result, robust fillets can be formed easily on both the outer surface and the interior surface of the hollow structure.

If the solidus temperature of the second filler material exceeds 570°C, then it is difficult to cause the filler originating from the second filler material to flow before the filler originating from the first filler material flows. Consequently, in this situation, the filler originating from the first filler material tends to be drawn into the interior of the hollow structure, and therefore there is a risk that fillet tearings or the like will occur on the outer surface of the hollow structure.

Specifically, the Al-Si alloy that constitutes the second filler material indispensably contains Si: 6%-13% and furthermore preferably contains at least one among Cu: 0.2%-2% and Zn: 2%-6%. In this case, a solidus temperature in the above-mentioned specific range can be achieved easily. If either the Cu or the Zn content is below the above-mentioned specific range, then there is a risk that the solidus temperature of the second filler material will exceed 570°C. On the other hand, if the content of either Cu or Zn is above the above-mentioned specific range, then there is a risk that cracks will occur when the second filler material is being rolled. It is noted that the functions and effects of Si in the second filler material and the reasons for limits thereon are the same as for the first filler material.

If the intermediate material is disposed between the core and the first filler material, then the intermediate material may be composed of an aluminum alloy having a chemical composition that contains one or two or more selected from the group consisting of Li: 0.05% or more, Be: 0.05% or more, Ba: 0.05% or more, and Ca: 0.05% or more, the remainder being composed of Al and unavoidable impurities. The above-mentioned elements contained in the intermediate material elute into the filler originating from the first filler material in the brazing process and thereby can break down the oxide films. As a result, robust fillets can be easily formed.

If just one among the above-mentioned four elements is included in the intermediate material, then the effect of breaking down the oxide films can be sufficiently obtained by setting the content of that element to 0.05% or more. In addition, if two or more of the above-mentioned four elements are included in the intermediate material, then the effect of breaking down the oxide films can be sufficiently obtained by setting the content of at least one of the elements to 0.05% or more.

The upper limits of the contents of the above-mentioned four elements vary with the ratio of the thicknesses of the first filler material and the intermediate material. Specifically, for the case in which it is assumed that the above-mentioned four elements have all eluted into the filler originating from the first filler material, the total amount of the above-mentioned elements in the filler is preferably 0.15% or less and more preferably 0.1% or less. For example, if the intermediate material has a thickness that is 1/5^{th} that of the first filler material, and Li and Be are included in the intermediate material, then the total amount of the Li and Be in the intermediate material is preferably set to 0.75% or less and more preferably set to 0.5% or less.

If the total amount of the above-mentioned elements in the filler is more than 0.15%, then there is a risk that oxides of the elements will be formed during the brazing process, which will lead to a decrease in brazeability. In addition, if the total amount of the above-mentioned elements in the intermediate material is more than 1.5%, then cracks tend to occur during casting, rolling, or the like of the intermediate material.

The aluminum alloy that constitutes the intermediate material may further contain Si: 4%-13%. In this case, because the first filler material and the intermediate material start melting simultaneously during the brazing process, Li and the like in the intermediate material rapidly elute into the filler. As a result, the oxide films can be broken down sooner, and brazeability can be further improved, particularly if the temperature-rise rate is fast.

If the Si content in the intermediate material is less than 4%, then there is a risk that the above-mentioned effect will become insufficient because the start of the melting of the intermediate material will be later. On the other hand, if the Si content is more than 13%, then there is a risk that the amount dissolved in the core will become excessively large, which will lead to a decrease in brazeability. In addition, in this situation, cracks tend to occur during rolling of the intermediate material.

The aluminum alloy that constitutes the intermediate material may further contain at least one among Zn: 0.2%-6% and Cu: 0.1%-3%. In this case, because the solidus temperature of the intermediate material will decrease, the rate at which Li and the like diffuses into the first filler material immediately before the melting of the first filler material can be increased. As a result, the effect of breaking down the oxide films can be improved.

If either of the Zn and Cu contents is less than the above-mentioned ranges, there is a risk that the above-mentioned effect will become insufficient because the solidus temperature of the intermediate material will not decrease sufficiently. On the other hand, if the content of at least one of Zn or Cu exceeds its above-mentioned range, then cracks tend to occur during rolling of the intermediate material.

The aluminum alloy that constitutes the intermediate material may further contain Mg: 0.2%-6%. Mg functions to break down the oxide films, the same as Li and the like described above. Consequently, by including Mg within the above-mentioned specific range in the intermediate material, the effect of breaking down the oxide films by Mg in addition to Li and the like can be obtained, and thereby the breakdown of the oxide films can be further promoted.

If the Mg content in the intermediate material is less than 0.2%, then there is a risk that the above-mentioned effect produced by Mg will become insufficient. On the other hand, if the Mg content is more than 6%, then cracks tend to occur during rolling of the intermediate material.

Instead of an aluminum alloy that indispensably contains Li and the like as discussed above, the intermediate material of the clad sheet may be composed of an aluminum alloy that indispensably contains Mg. That is, the intermediate material may be composed of an aluminum alloy having a chemical composition that contains Mg: 0.2%-6%, the remainder being composed of Al and unavoidable impurities. In this case as well, because the oxide films are broken down by Mg that has eluted into the filler originating from the first filler material, robust fillets can be formed more easily. If the Mg content in the intermediate material is less than 0.2%, then there is a risk that the above-mentioned effect produced by Mg will become insufficient. On the other hand, if the Mg content is more than 6%, then cracks tend to occur during rolling of the intermediate material.

The aluminum alloy that constitutes the intermediate material may further contain Si: 4%-13%. The functions and effects of Si and the reasons for limits on the contents are the same as for those in the case of the intermediate material that contains Li and the like as described above.

In addition, in either the case in which Li, etc. is indispensably included in the aluminum alloy that constitutes the first filler material or the case in which Mg is indispensably included, the intermediate material may further contain Bi: 0.02%-1.2%. Bi in the intermediate material elutes into the filler originating from the first filler material and thereby decreases the surface tension of the filler; thus, brazeability can be improved. If the Bi content is less than 0.02%, then the effect of decreasing the surface tension will become insufficient. In addition, if the Bi content is more than 1.2%, then cracks tend to occur during rolling of the intermediate material. Furthermore, in this situation, there is a risk that the surface tension of the filler will decrease excessively and, worse yet, the ability to form fillets will decrease.

In the above-mentioned manufacturing method, the clad sheet(s) and the tubular member(s) having the above-mentioned compositions are prepared, after which the hollow structure is manufactured from the clad sheet(s). Subsequently, the tubular member(s) is (are) inserted into a through hole or through holes in the hollow structure, the aluminum structure is assembled, and then the brazing process that joins the hollow structure and the tubular member(s) using a fluxless-brazing method is performed.

Here, the hollow structure is preferably etched using an acid or an alkali prior to the brazing process. Thereby, the oxide films that are formed on the surfaces in the interval up to the formation of the hollow structure are removed. During the interval from after etching has been performed until the brazing process, oxide films form naturally; however, these oxide films are fragile compared to the oxide films that were removed by the etching. For this reason, the oxide films can be easily broken down in the brazing process and, as a result, brazeability can be further improved.

An industrially available inert gas, such as nitrogen, argon, or a mixture of nitrogen and argon, can be used as the atmosphere during the brazing process. From the viewpoint of improving brazeability, the lower the oxygen concentration of the inert gas, the better. Specifically, an inert gas having an oxygen concentration of, for example, 50 ppm or less can be suitably used.

The heating temperature during the brazing process is preferably 585°C-620°C and more preferably 590°C-610°C. If the heating temperature is below 585°C, then there is a risk that the fluidity of the filler will become insufficient, which will lead to a decrease in brazeability. On the other hand, if the heating temperature exceeds 620°C, then there is a risk that erosion will occur in the core. In addition, from the viewpoint of suppressing unnecessary oxidation of the aluminum structure while the temperature is rising, the temperature-rise rate during the brazing process is preferably as fast as possible.

The above-mentioned manufacturing method is ideally suited also to the case in which brazing of an aluminum structure, in which an internal member is housed in the hollow structure, is performed. Brazing of an aluminum structure having an internal member is performed using a previously existing brazing method, then, when the melting of the filler material progresses, the state results in which the join part(s) present in the interior of the hollow structure - that is, the inner-surface side of the contact part(s) between the internal member and the hollow structure, the contact(s) part between the hollow structure and the tubular member, and the like - is (are) connected via the melted filler. Consequently, compared with the case in which there is no internal member, the amount of filler drawn into the join part(s) present in the interior of the hollow structure tends to become large. As a result, there is a problem in that it becomes even more difficult for a fillet to form on the outer surface of the hollow structure.

In contrast, according to the above-mentioned manufacturing method, the second filler material present in the interior of the hollow structure melts before the first filler material does, and therefore fillet(s) form(s) at the join part(s) present in the interior of the hollow structure. Consequently, when the first filler material becomes capable of flowing, it is possible to easily avoid the case in which the contact part(s) between the internal member and the hollow structure connects with the melted first filler material. For this reason, according to the above-mentioned manufacturing method, even in the case in which an internal member is housed in the hollow structure, it is possible to prevent the filler from being drawn into the interior of the hollow structure. As a result, robust fillets can be easily formed on both surfaces of the hollow structure.

### Working Examples

### (Working Example)

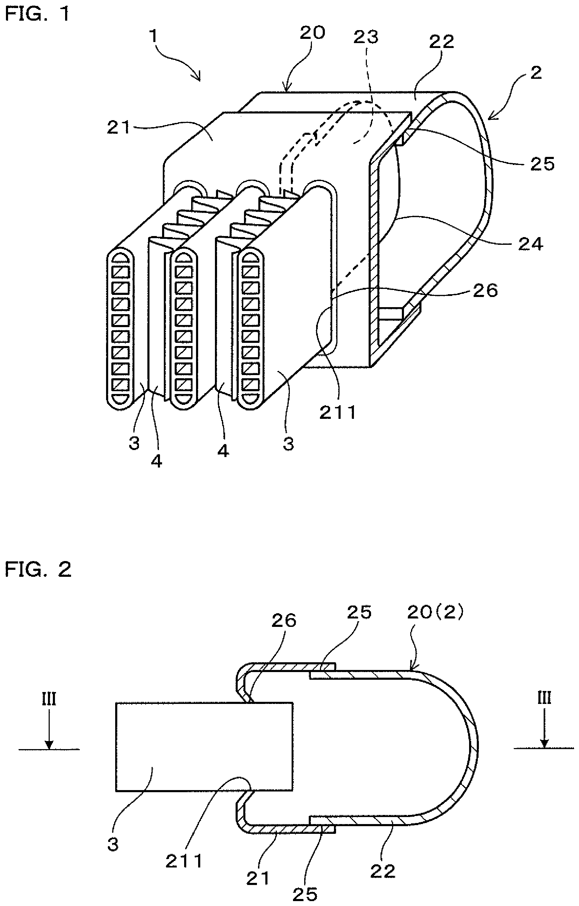

A working example of the aluminum-structure manufacturing method will now be explained, with reference to the drawings. An aluminum structure 1 of the present example has a structure that mimics a parallel-flow-type heat exchanger and, as shown in FIG. 1, comprises: a hollow structure 2; a plurality of tubular members 3 that are inserted in the hollow structure 2; and outer fins 4 that are disposed between the adjacent tubular members 3. The hollow structure 2, the tubular members 3, and the outer fins 4 are joined together by a fluxless-brazing method.

As shown in FIG. 1 and FIG. 2, the hollow structure 2 exhibits a tube shape and comprises: a header part 21, which has through holes 211 into which the tubular members 3 are inserted; and a tank part 22, which is disposed opposing the header part 21. As shown in FIG. 1, a separator part 23 for adjusting a passageway of a tank main body 20 is housed in the interior of the tank main body 20, which comprises the header part 21 and the tank part 22. In addition, both ends of the tank main body 20 are closed up by cap parts (not shown). The header part 21, the tank part 22, and the cap parts are each manufactured from a clad sheet having a multi-layer structure that comprises: a core composed of an aluminum material; a first filler material disposed on one side of the core; and a second filler material disposed on the other side of the core. In addition, the hollow structure 2 is manufactured such that the first filler material of the header part 21, the tank part 22, and the cap parts is disposed on the outer-surface side, and the second filler material is disposed on the inner-surface side. The separator part 23 is composed of a single plate of aluminum material. It is noted that the separator part 23 can also be composed of a clad sheet.

The first filler material is composed of an Al-Si alloy. The second filler material is composed of an Al-Si alloy that includes at least one of Cu and Zn and has a solidus temperature of 570°C or less. In addition, an element that breaks down oxide films is included in at least one layer of the multi-layer structure of the clad sheet.

The tubular members 3 are composed of an aluminum material. It is noted that FIG. 1 shows an example of an extruded multi-hole tube formed by extruding an aluminum material; however, instead of the extruded multi-hole tube, it is also possible to use a shaped plate material formed by processing a plate material into a tube shape.

As shown in FIG. 1, in the present example, the outer fins 4, which are composed of an aluminum material, are disposed between the adjacent tubular members 3. The outer fins 4 may each be composed of a two-sided brazing sheet, in which the filler material is disposed on both sides of the core. If the tubular members 3 have a filler material on their outer surfaces, then the outer fins 4 may be bare fins that have no filler material. Each of the outer fins 4 of the present example is a corrugated fin in which the two-sided brazing sheet is formed into a corrugated shape.

After the hollow structure 2 is assembled from the header part 21, the tank part 22, the separator part 23, and the cap parts prepared as described above, the tubular members 3 are inserted into the through holes 211 of the hollow structure 2. Furthermore, the outer fins 4 are disposed between the adjacent tubular members 3, and thereby the aluminum structure 1 shown in FIG. 1 is assembled.

Subsequently, the brazing process is performed that heats the aluminum structure 1 in an inert-gas atmosphere and simultaneously joins the header part 21, the tank part 22, the separator 23, the cap parts, and the tubular members 3.

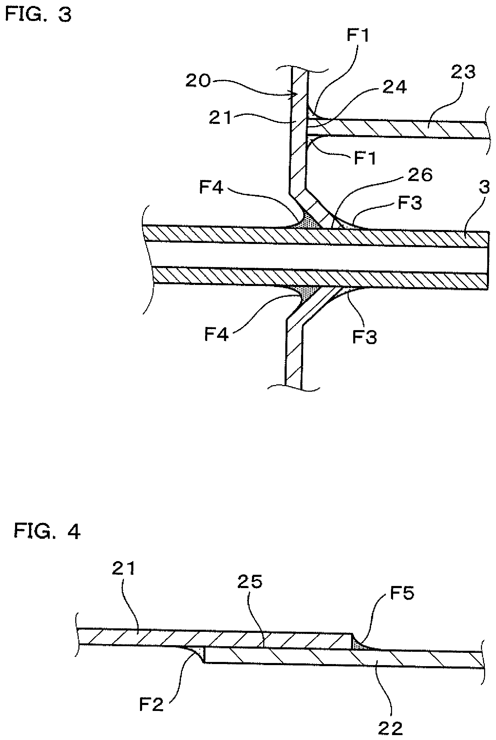

When the temperature of the aluminum structure 1 rises during the brazing process, the solidus temperature of the second filler material is reached before that of the first filler material, and the second filler material begins to melt. When the temperature rises further, the second filler material will become flowable. Thereby, fillets F1, F2 are formed at the join parts present on the inner side of the hollow structure 2, that is, for example, on the inner surface of join part 24 (refer to FIG. 3) between the tank main body 20 and the separator part 23, and on the inner surface of join part 25 (refer to FIG. 4) between the header part 21 and the tank part 22. In addition, depending on the shape of the header part 21, fillets F3 are also formed on an inner surface of join parts 26 (refer to FIG. 3) between the tubular members 3 and the header part 21.

The first filler material reaches the solidus temperature later than the second filler material does and becomes flowable after the fillets are formed on the join parts present in the interior of the hollow structure 2. Consequently, it becomes difficult for the filler originating from the first filler material to be drawn into the interior of the hollow structure 2. As a result, owing to the filler originating from the first filler material, fillets F4, F5 are formed at the join parts present on the outer surface of the hollow structure 2, that is, for example, on the outer-surface side of the join parts 26 (refer to FIG. 3) between the tubular members 3 and the header part 21, and on the outer-surface side of the join part 25 (refer to FIG. 4) between the header part 21 and the tank part 22. It is noted that, for the sake of expedience, the fillets F1-F5 are not shown in FIG. 1 and FIG. 2.

In addition, as shown in FIG. 1, in the present example, the outer fins 4 are joined to the tubular members 3 by the above-mentioned brazing process. The aluminum structure 1, in which all the component parts are joined by brazing, can be obtained based on the above.

The present embodiment describes an example in which the separator part 23, which serves as an internal member, is housed in the hollow structure 2, but functions and effects the same as those described above can be achieved even in the case in which an internal member other than the separator part 23 is housed in the interior of the hollow structure 2. That is, even in the case in which, for example, an inner fin, a solid embedded member, or the like is housed in the interior of the hollow structure 2, in the same manner as described above, the second filler material melts before the first filler material does and flows thereafter. For this reason, the fillets are formed before the join parts between the hollow structure 2 and the inner fin or the like are formed, and thereby the first filler material can be prevented from being drawn into the interior of the hollow structure.

### (Test Examples)

The present example evaluates brazeability by variously modifying the materials of the clad sheets, the tubular members 3, and the like in the above-mentioned working example. A test-body fabricating method and evaluating method used in the present example are explained below.

### <Preparation of Component Parts>

### • Header Part 21, Tank Part 22, and Cap Parts

Clad sheets, in which the layer configurations of the multi-layer structures were variously modified, were prepared as shown in Table 1 to Table 4, after which the header parts 21, the tank parts 22, and the cap parts shown in FIG. 1 and FIG. 2 were manufactured by press working the clad sheets. Materials A1-A6 (refer to Table 1) each had a three-layer structure comprising a core, a first filler material layered on one side of the core, and a second filler material layered on the other side of the core. Materials B1-B25 (refer to Table 1 to Table 4) each had a four-layer structure in which a first filler material, an intermediate material, a core, and a second filler material were sequentially layered. Materials C1-C2 (refer to Table 4) each had a five-layer structure in which a first filler material, a first intermediate material, a core, a second intermediate material, and a second filler material were sequentially layered.

The plate thicknesses of the clad sheets were all 1.2 mm. The clad ratios of the first filler material and the second filler material, that is, the ratios of the filler-material thicknesses to the total plate thickness of the clad sheet, were all set to 5%. In addition, the clad ratios of the intermediate materials were all set to either 1% or 2.5%, as shown in Table 1 to Table 4.

### • Separator Part 23

A plate material composed of JIS A3003 alloy and having a thickness of 1.2 mm was used as the separator part 23.

### • Tubular Members 3

Either shaped plate materials (composed of single-sided brazing sheets) or extruded multi-hole tubes were used as the tubular members 3, as shown in Table 5 and Table 6.

The extruded multi-hole tubes were manufactured from a 1000-series alloy having a chemical composition containing Cu (copper): 0.4% and Mn (manganese): 0.1%, the remainder being composed of Al and unavoidable impurities. In addition, the thickness of wall parts of the extruded multi-hole tube was set to 0.25 mm.

The shaped plate materials were each manufactured from a single-sided brazing sheet composed of a core and a filler material, which was layered on one surface side of the core, and had a plate thickness of 0.25 mm. Each shaped plate material exhibited a tube shape, and the filler material was disposed on the outer surface.

The cores of the single-sided brazing sheets were each a 3000-series alloy having a chemical composition containing Si: 0.15%, Cu: 0.1%, Mn: 1.2%, and Mg: 0.3%, the remainder being composed of Al and unavoidable impurities. In addition, the filler materials of the single-sided brazing sheets were each an Al-Si alloy having a chemical composition that contains Si: 10%, Mg: 0.1%, and Bi: 0.05%, the remainder being composed ofAl and unavoidable impurities. The clad ratio of the filler material was set to 10%.

### • Outer Fins 4

The outer fins 4 were manufactured from two-sided brazing sheets each composed of a core and a filler material, which was layered on both sides of the core, and having a plate thickness of 0.1 mm.

The cores of the two-sided brazing sheets were an aluminum alloy having a chemical composition that contains Mn: 1.2%, Mg: 0.4%, and Zn: 0.1%, the remainder being composed of Al and unavoidable impurities. In addition, the filler materials of the two-sided brazing sheets were all an Al-Si alloy having a chemical composition containing Si: 10% and Bi: 0.05%, the remainder being composed of Al and unavoidable impurities. The clad ratios of the filler materials were all set to 10% on all sides.

### <Assembly of the Test specimens>

A degreasing treatment was performed by immersing all the above-mentioned component parts in acetone. Next, as shown in Table 1 to Table 4, components composed of some of the clad sheets were etched using an acid or an alkali to remove the oxide films. In the cases in which the etching was performed using an acid, the components were immersed for 60 s in an aqueous solution of hydrofluoric acid having a concentration of 2%, after which the components were rinsed and then dried. In addition, if the etching was performed using an alkali, then the components were immersed for 30 s in an aqueous solution of sodium hydroxide having a concentration of 5% and a temperature of 50°C, after which the components were rinsed and then dried.

Subsequently, all the components were assembled as shown in Table 5 and Table 6, after which they were fixed in a jig to assemble the aluminum structures 1 (test specimens 1-37) shown in FIG. 1.

### <Brazing Process>

The brazing process was performed using a nitrogen-gas furnace comprising a preheating chamber and a brazing chamber, which is connected to the preheating chamber, and capable of replacing the interior of the furnace with nitrogen gas. The brazing process was performed in accordance with the following procedure. On each of the test specimens, a thermocouple was attached in the vicinity of a join part 26 between a tubular member 3 and the header part 21, after which the test specimen was disposed in the preheating chamber. In the preheating chamber, the temperature of the test specimen was raised to 450°C, after which the test specimen was moved to the brazing chamber where the temperature of the test specimen was raised to 600°C. After the temperature of the test specimen reached 600°C, the test specimen was immediately moved to the preheating chamber. Furthermore, the interior of the preheating chamber was cooled until the temperature reached 540°C, after which the test specimen was removed to outside the furnace. The brazing process was performed based on the above, and thereby the brazing of the test specimens was completed.

The atmosphere inside the preheating chamber and the brazing chamber in the above-mentioned brazing process was set to a nitrogen gas atmosphere in which the oxygen concentration was 12-17 ppm. In addition, the time until the test specimens disposed in the preheating chamber reached 450°C was set to approximately 20 min. The temperature-rise time, which is the time until the test specimens that were moved to the brazing chamber reached 600°C, was set to either 12 min or 3 min, as shown in Table 5 and Table 6.

### <Evaluation>

The brazed test specimens were visually observed and the fillet formation states were evaluated. In the present example, two locations were visually observed: the fillets F4 (refer to FIG. 3) formed at the outer surfaces of the join parts 26 between the header part 21 and the tubular members 3; and the fillets F5 (refer to FIG. 4) formed at the outer surfaces of the join parts 25 between the header part 21 and the tank part 22. The results are shown in Table 5 and Table 6.

It is noted that the symbols shown in the "fillet formation state" column in Table 5 and Table 6 correspond to the following states. In states D and E among symbols A-E, an "unacceptable" determination was made because of the risk that it might lead to a leakage defect.
A: Large-sized fillets were evenly formed.
B: Fillets smaller in size than the A were evenly formed.
C: Fillets smaller in size than the B or fillets of uneven sizes were formed, but fillet tearings did not occur.
D: Fillet tearings occurred locally and the fillets were discontinuous.
E: Fillet tearings occurred more numerously than in D, or fillets were not formed.

**Table 1**

| Material No. | Configuration | CladRatio (%) | Chemical Composition (Mass%) | | | | | | | | | | Solidus Temperature of Filler Material (°C) | Etching Treatment |
|---|---|---|---|---|---|---|---|---|---|---|---|---|---|---|
| | | | Si | Cu | Mn | Mg | Zn | Li | Be | Ca | Ba | Bi | | |
| A1 | First filler material | 5 | 10 | - | - | - | - | - | - | - | - | - | 577 | No |
| | Core | - | | - | 1.2 | - | - | - | - | - | - | - | | |
| | Second filler material | 5 | 10 | - | - | - | - | - | - | - | - | - | 577 | |
| A2 | First filler material | 5 | 10 | - | - | - | - | - | - | - | - | - | 577 | No |
| | Core | - | | - | 1.2 | 0.6 | - | - | - | - | - | - | | |
| | Second filler material | 5 | 10 | - | - | - | - | - | - | - | - | - | 577 | |
| A3 | First filler material | 5 | 10 | - | - | - | - | - | - | - | - | - | 577 | No |
| | Core | - | - | - | 1.2 | 0.6 | - | - | - | - | - | - | | |
| | Second filler material | 5 | 10 | - | - | - | 3.4 | - | - | - | - | - | 569 | |
| A4 | First filler material | 5 | 10 | - | - | - | - | - | - | - | - | - | 577 | No |
| | Core | - | - | - | 1.2 | 0.6 | - | - | - | - | - | - | | |
| | Second filler material | 5 | 10 | 0.6 | - | - | - | - | - | - | - | - | 570 | |
| A5 | First filler material | 5 | 10 | - | - | - | - | - | - | - | - | - | 577 | No |
| | Core | - | - | - | 1.2 | 0.6 | - | - | - | - | - | - | | |
| | Second filler material | 5 | 10 | 0.6 | - | - | 3.4 | - | - | - | - | - | 563 | |
| A6 | First filler material | 5 | 10 | - | - | - | - | 0.01 | 0.01 | - | - | - | 577 | Yes (acid) |
| | Core | - | - | - | 1.2 | 0.6 | - | - | - | - | - | - | | |
| | Second filler material | 5 | 10 | 0.6 | - | - | 3.4 | - | - | - | - | - | 563 | |
| B1 | First filler material | 5 | 10 | - | - | - | - | - | - | - | - | - | 577 | Yes (acid) |
| | Intermediate material | 1 | - | - | - | - | - | 0.15 | - | - | - | - | | |
| | Core | - | - | - | 1.2 | - | - | - | - | - | - | - | | |
| | Second filler material | 5 | 10 | - | - | - | - | - | - | - | - | - | 577 | |
| B2 | First filler material | 5 | 10 | - | - | - | - | - | - | - | - | - | 577 | Yes (acid) |
| | Intermediate material | 1 | - | - | - | - | - | 0.15 | - | - | - | - | | |
| | Core | - | - | - | 1.2 | - | - | - | - - | - | - | - | | |
| | Second filler material | 5 | 10 | 0.6 | - | - | 3.4 | - | - | - | - | - | 563 | |
| B3 | First filler material | 5 | 10 | - | - | - | - | - | - | - | - | - | 577 | No |
| | Intermediate material | 1 | - | - | - | - | - | - | - | 0.09 | 0.08 | - | | |
| | Core | - | - | - | 1.2 | 0.6 | - | - | - | - | - | - | | |
| | Second filler material | 5 | 10 | - | - | - | - | - | - | - | - | - | 577 | |
| B4 | First filler material | 5 | 10 | - | - | - | - | - | - | - | - | - | 577 | No |
| | Intermediate material | 1 | - | - | - | - | - | - | - | 0.09 | 0.08 | - | | |
| | Core | - | - | - | 1.2 | 0.6 | - | - | - | - | - | - | | |
| | Second filler material | 5 | 10 | 0.6 | - | - | 3.4 | - | - | - | - | - | 563 | |

**Table 2**

| Material No. | Configuration | CladRatio (%) | Chemical Composition (Mass%) | | | | | | | | | | Solidus Temperature of Filler Material (°C) | Etching Treatment |
|---|---|---|---|---|---|---|---|---|---|---|---|---|---|---|
| | | | Si | Cu | Mn | Mg | Zn | Li | Be | Ca | Ba | Bi | | |
| B5 | First filler material | 5 | 10 | - | - | - | - | - | - | - | - | - | 577 | No |
| | Intermediate material | 1 | 10 | - | - | - | - | - | 0.1 | - | - | - | | |
| | Core | - | - | - | 1.2 | 0.6 | - | - | - | - | - | - | | |
| | Second filler material | 5 | 10 | - | - | - | - | - | - | - | - | - | 577 | |
| B6 | First filler material | 5 | 10 | - | - | - | - | - | - | - | - | - | 577 | No |
| | Intermediate material | 1 | 10 | - | - | - | - | - | 0.1 | - | - | - | | |
| | Core | - | - | - | 1.2 | 0.6 | - | - | - | - | - | - | | |
| | Second filler material | 5 | 10 | 0.6 | - | - | 3.4 | - | - | - | - | - | 563 | |
| B7 | First filler material | 5 | 10 | - | - | - | - | - | - | - | - | - | 577 | No |
| | Intermediate material | 1 | 10 | | - | | | 0.15 | - | - | - | - | | |
| | Core | - | - | - | 1.2 | - | - | - | - | - | - | - | | |
| | Second filler material | 5 | 10 | 0.6 | - | - | 3.4 | - | - | - | - | - | 563 | |
| B8 | First filler material | 5 | 10 | - | - | - | - | - | - | - | - | - | 577 | No |
| | Intermediate material | 1 | 10 | 1.2 | - | - | 3.5 | - | 0.1 | - | - | - | | |
| | Core | - | - | - | 1.2 | 0.6 | - | - | - | - | - | - | | |
| | Second filler material | 5 | 10 | - | - | - | - | - | - | - | - | | 577 | |
| B9 | First filler material | 5 | 10 | - | - | - | - | - | - | - | - | - | 577 | No |
| | Intermediate material | 1 | 10 | 1.2 | - | - | 3.5 | - | 0.1 | - | - | - | | |
| | Core | - | - | - | 1.2 | 0.6 | - | - | - | - | - | - | | |
| | Second filler material | 5 | 10 | 0.6 | - | - | 3.4 | - | - | - | - | - | 563 | |
| B10 | First filler material | 5 | 10 | - | - | - | - | - | - | - | - | - | 577 | No |
| | Intermediate material | 1 | - | 1.2 | - | - | 3.5 | 0.15 | - | - | - | - | | |
| | Core | - | - | - | 1.2 | - | | - | - | - | - | - | | |
| | Second filler material | 5 | 10 | 0.6 | - | - | 3.4 | - | - | - | - | - | 563 | |
| B11 | First filler material | 5 | 10 | - | - | - | - | - | - | - | - | - | 577 | No |
| | Intermediate material | 1 | - | - | - | 3 | - | - | - | - | - | - | | |
| | Core | - | - | - | 1.2 | - | - | - | - | - | - | - | | |
| | Second filler material | 5 | 10 | 0.6 | - | - | 3.4 | - | - | - | - | - | 563 | |
| B12 | First filler material | 5 | 10 | - | - | - | - | - | - | - | - | - | 577 | No |
| | Intermediate material | 1 | - | - | - | 3 | - | - | - | - | - | - | | |
| | Core | - | - | - | 1.2 | 0.6 | - | - | - | - | - | - | | |
| | Second filler material | 5 | 10 | - | - | - | 3.4 | - | - | - | - | - | 569 | |
| B13 | First filler material | 5 | 10 | - | - | - | - | - | - | - | - | - | 577 | No |
| | Intermediate material | 1 | 10 | - | - | - | - | 3 | - | - | - | - | | |
| | Core | - | - | - | 1.2 | 0.6 | - | - | - | - | - | - | | |
| | Second filler material | 5 | 10 | - | - | - | 3.4 | - | - | - | - | - | 569 | |

**Table 2**

| Material No. | Configuration | CladRatio (%) | Chemical Composition (Mass%) | | | | | | | | | | Solidus Temperature of Filler Material (°C) | Etching Treatment |
|---|---|---|---|---|---|---|---|---|---|---|---|---|---|---|
| | | | Si | Cu | Mn | Mg | Zn | Li | Be | Ca | Ba | Bi | | |
| B14 | First filler material | 5 | 10 | - | - | - | - | - | - | - | - | - | 577 | No |
| | Intermediate material | 1 | 16 | - | - | 3 | - | - | - | - | - | - | | |
| | Core | - | - | - | 1.2 | 0.6 | - | - | - | - | - | - | | |
| | Second filler material | 5 | 10 | - | - | - | 3.4 | - | - | - | - | - | 569 | |
| B15 | First filler material | 5 | 10 | - | - | - | - | - | - | - | - | - | 577 | No |
| | Intermediate material | 1 | - | - | - | 3 | - | 0.15 | - | - | - | - | | |
| | Core | - | - | - | 1.2 | - | - | - | - | - | - | - | | |
| | Second filler material | 5 | 10 | 0.6 | - | - | 3.4 | - | - | - | - | - | 563 | |
| B16 | First filler material | 5 | 10 | - | - | - | - | - | - | - | - | - | 577 | No |
| | Intermediate material | 1 | - | - | - | 3 | - | - | - | 0.09 | 0.08 | - | | |
| | Core | - | - | - | 1.2 | 0.6 | - | - | - | - | - | - | | |
| | Second filler material | 5 | 10 | 0.6 | - | - | 3.4 | - | - | - | - | - | 563 | |
| B17 | First filler material | 5 | 10 | - | - | - | - | - | - | - | - | - | 577 | No |
| | Intermediate material | 1 | 10 | - | - | 3 | - | 0.15 | - | - | - | - | | |
| | Core | - | - | - | 1.2 | - | - | - | - | - | - | - | | |
| | Second filler material | 5 | 10 | 0.6 | - | - | 3.4 | - | - | - | - | - | 563 | |
| B18 | First filler material | 5 | 10 | - | - | - | - | - | - | - | - | - | 577 | No |
| | Intermediate material | 1 | 10 | 1.2 | - | 3 | 3.5 | - | 0.1 | - | - | - | | |
| | Core | - | - | - | 1.2 | 0.6 | - | - | - | - | - | - | | |
| | Second filler material | 5 | 10 | 0.6 | - | - | 3.4 | - | - | - | - | - | 563 | |
| B19 | First filler material | 5 | 10 | - | - | - | - | - | - | - | - | - | 577 | No |
| | Intermediate material | 1 | - | 1.2 | - | 3 | 3.5 | 0.15 | - | - | - | - | | |
| | Core | - | - | - | 1.2 | - | | - | - | - | - | - | | |
| | Second filler material | 5 | 10 | 0.6 | - | - | 3.4 | | | - | | | 563 | |
| B20 | First filler material | 5 | 10 | - | - | - | - | - | - | - | - | - | 577 | No |
| | Intermediate material | 1 | - | - | - | - | - | 0.15 | - | - | - | 0.08 | | |
| | Core | - | - | - | 1.2 | - | - | - | - | - | - | - | | |
| | Second filler material | 5 | 10 | 0.6 | - | - | 3.4 | - | - | - | - | - | 563 | |
| B21 | First filler material | 5 | 10 | - | - | - | - | - | - | - | - | - | 577 | No |
| | Intermediate material | 1 | 10 | 1.2 | - | 3 | 3.5 | - | 0.1 | - | - | 0.08 | | |
| | Core | - | - | - | 1.2 | 0.6 | - | - | - | - | - | - | | |
| | Second filler material | 5 | 10 | 0.6 | - | - | 3.4 | - | - | - | - | - | 563 | |
| B22 | First filler material | 5 | 6 | - | - | - | - | 0.01 | 0.01 | - | - | - | 577 | No |
| | Intermediate material | 1 | 10 | 1.2 | - | 3 | 3.5 | - | 0.1 | - | - | 0.08 | | |
| | Core | - | - | - | 1.2 | 0.6 | - | - | - | - | - | - | | |
| | Second filler material | 5 | 10 | 0.6 | - | - | 3.4 | - | - | - | - | - | 563 | |

**Table 3**

| Material No. | Configuration | Clad Ratio (%) | Chemical Composition (Mass%) | | | | | | | | | | Solidus Temperature of Filler Material (°C) | Etching Treatment |
|---|---|---|---|---|---|---|---|---|---|---|---|---|---|---|
| | | | Si | Cu | Mn | Mg | Zn | Li | Be | Ca | Ba | Bi | | |
| B23 | First filler material | 5 | 4 | - | - | - | - | 0.01 | 0.01 | - | - | - | 577 | No |
| | Intermediate material | 1 | 10 | 1.2 | - | 3 | 3.5 | - | 0.1 | - | - | 0.08 | | |
| | Core | - | - | - | 1.2 | 0.6 | - | - | - | - | - | - | | |
| | Second filler material | 5 | 10 | 0.6 | - | - | 3.4 | - | - | - | - | - | 563 | |
| B24 | First filler material | 5 | 6 | - | - | - | - | 0.01 | 0.01 | - | - | - | 577 | Yes (acid) |
| | Intermediate material | 1 | 10 | 1.2 | - | 3 | 3.5 | - | 0.1 | - | - | 0.08 | | |
| | Core | - | - | - | 1.2 | 0.6 | - | - | - | - | - | - | | |
| | Second filler material | 5 | 10 | 0.6 | - | - | 3.4 | - | - | - | - | - | 563 | |
| B25 | First filler material | 5 | 10 | - | - | - | - | - | - | - | - | - | 577 | No |
| | Intermediate material | 2.5 | - | - | - | 3 | - | - | - | - | - | 0.1 | | |
| | Core | - | - | - | 1.2 | 0.6 | | | | - | - | - | | |
| | Second filler material | 5 | 10 | - | - | - | - | - | - | | - | - | 577 | |
| C1 | First filler material | 5 | 10 | - | - | - | - | - | - | - | - | - | 577 | No |
| | First intermediate material | 2.5 | 10 | - | - | 2 | - | - | - | - | - | 0.08 | | |
| | Core | - | - | - | 1.2 | - | - | - | - | - | - | - | | |
| | Second intermediate material | 2.5 | 10 | - | - | 2 | - | - | - | - | - | 0.08 | | |
| | Second filler material | 5 | 10 | - | - | - | - | - | - | - | - | - | 577 | |
| C2 | First filler material | 5 | 10 | - | - | - | - | 0.02 | - | - | - | 0.04 | 577 | No |
| | First intermediate material | 1 | - | - | - | 2 | - | - | - | - | - | - | | |
| | Core | - | - | - | 1.2 | - | - | - | - | - | - | - | | |
| | Second intermediate material | 1 | - | - | - | 2 | - | - | - | - | - | - | | |
| | Second filler material | 5 | 10 | 0.6 | - | - | 3.4 | - | - | - | - | - | 563 | |

**Table 5**

| Test Specimen No. | Configuration of Test Specimen | | Temperature-Rise Time | Formation State of Fillets | | Remarks |
|---|---|---|---|---|---|---|
| | Component Part | Material No. | | Parts to Be Joined between Header Part and Tubular Parts | Parts to Be Joined between Header Part and Tank Part | |
| 1 | Header part, tank part, and cap part | A3 | 12 min | C | C | |
| | Separator part | 3003 plate | | | | |
| | Tubular member | Extruded multi-hole tube | | | | |
| 2 | Header part, tank part, and cap part | A4 | 12 min | C | C | |
| | Separator part | 3003 plate | | | | |
| | Tubular member | Extruded multi-hole tube | | | | |
| 3 | Header part, tank part, and cap part | A5 | 12 min | C | C | |
| | Separator part | 3003 plate | | | | |
| | Tubular member | Extruded multi-hole tube | | | | |
| 4 | Header part, tank part, and cap part | A5 | 12 min | C | C | |
| | Separator part | 3003 plate | | | | |
| | Tubular member | Shaped plate member | | | | |
| 5 | Header part, tank part, and cap part | A6 | 12 min | C | B | |
| | Separator part | 3003 plate | | | | |
| | Tubular member | Extruded multi-hole tube | | | | |
| 6 | Header part, tank part, and cap part | B2 | 12 min | C | C | |
| | Separator part | 3003 plate | | | | |
| | Tubular member | Extruded multi-hole tube | | | | |
| 7 | Header part, tank part, and cap part | B4 | 12 min | C | B | |
| | Separator part | 3003 plate | | | | |
| | Tubular member | Extruded multi-hole tube | | | | |
| 8 | Header part, tank part, and cap part | B4 | 12 min | C | B | |
| | Separator part | 3003 plate | | | | |
| | Tubular member | Shaped plate member | | | | |
| 9 | Header part, tank part, and cap part | B6 | 12 min | B | B | |
| | Separator part | 3003 plate | | | | |
| | Tubular member | Extruded multi-hole tube | | | | |
| 10 | Header part, tank part, and cap part | B7 | 12 min | C | B | |
| | Separator part | 3003 plate | | | | |
| | Tubular member | Extruded multi-hole tube | | | | |
| 11 | Header part, tank part, and cap part | B9 | 3 min | C | C | |
| | Separator part | 3003 plate | | | | |
| | Tubular member | Extruded multi-hole tube | | | | |
| 12 | Header part, tank part, and cap part | B9 | 3 min | C | C | |
| | Separator part | 3003 plate | | | | |
| | Tubular member | Shaped plate member | | | | |
| 13 | Header part, tank part, and cap part | B10 | 12 min | C | B | |
| | Separator part | 3003 plate | | | | |
| | Tubular member | Extruded multi-hole tube | | | | |
| 14 | Header part, tank part, and cap part | B11 | 12 min | C | B | |
| | Separator part | 3003 plate | | | | |
| | Tubular member | Extruded multi-hole tube | | | | |
| 15 | Header part, tank part, and cap part | B12 | 3 min | C | B | |
| | Separator part | 3003 plate | | | | |
| | Tubular member | Extruded multi-hole tube | | | | |
| 16 | Header part, tank part, and cap part | B13 | 3 min | C | B | |
| | Separator part | 3003 plate | | | | |
| | Tubular member | Extruded multi-hole tube | | | | |
| 17 | Header part, tank part, and cap part | B15 | 12 min | C | B | |
| | Separator part | 3003 plate | | | | |
| | Tubular member | Extruded multi-hole tube | | | | |
| 18 | Header part, tank part, and cap part | B16 | 12 min | B | B | |
| | Separator part | 3003 plate | | | | |
| | Tubular member | Extruded multi-hole tube | | | | |
| 19 | Header part, tank part, and cap part | B17 | 12 min | B | B | |
| | Separator part | 3003 plate | | | | |
| | Tubular member | Extruded multi-hole tube | | | | |

**Table 6**

| Test Specimen No. | Configuration of Test Specimen | | Temperature-Rise Time | Formation State of Fillets | | Remarks |
|---|---|---|---|---|---|---|
| | Component Part | Material No. | | Parts to Be Joined between Header Part and Tubular Parts | Parts to Be Joined between Header Part and Tank Part | |
| 20 | Header part, tank part, and cap part | B18 | 3 min | C | B | |
| | Separator part | 3003 plate | | | | |
| | Tubular member | Shaped plate member | | | | |
| 21 | Header part, tank part, and cap part | B19 | 12 min | B | B | |
| | Separator part | 3003 plate | | | | |
| | Tubular member | Extruded multi-hole tube | | | | |
| 22 | Header part, tank part, and cap part | B20 | 12 min | C | B | |
| | Separator part | 3003 plate | | | | |
| | Tubular member | Extruded multi-hole tube | | | | |
| 23 | Header part, tank part, and cap part | B21 | 3 min | B | B | |
| | Separator part | 3003 plate | | | | |
| | Tubular member | Shaped plate member | | | | |
| 24 | Header part, tank part, and cap part | B22 | 3 min | B | B | |
| | Separator part | 3003 plate | | | | |
| | Tubular member | Shaped plate member | | | | |
| 25 | Header part, tank part, and cap part | B24 | 3 min | B | A | |
| | Separator part | 3003 plate | | | | |
| | Tubular member | Shaped plate member | | | | |
| 26 | Header part, tank part, and cap part | B24 | 3 min | A | A | |
| | Separator part | 3003 plate | | | | |
| | Tubular member | Extruded multi-hole tube | | | | |
| 27 | Header part, tank part, and cap part | C2 | 12 min | C | B | |
| | Separator part | 3003 plate | | | | |
| | Tubular member | Shaped plate member | | | | |
| 28 | Header part, tank part, and cap part | A1 | 12 min | E | E | |
| | Separator part | 3003 plate | | | | |
| | Tubular member | Extruded multi-hole tube | | | | |
| 29 | Header part, tank part, and cap part | A2 | 12 min | D | D | |
| | Separator part | 3003 plate | | | | |
| | Tubular member | Extruded multi-hole tube | | | | |
| 30 | Header part, tank part, and cap part | B 1 | 12 min | D | D | |
| | Separator part | 3003 plate | | | | |
| | Tubular member | Extruded multi-hole tube | | | | |
| 31 | Header part, tank part, and cap part | B3 | 12 min | D | D | |
| | Separator part | 3003 plate | | | | |
| | Tubular member | Extruded multi-hole tube | | | | |
| 32 | Header part, tank part, and cap part | B5 | 12 min | D | D | |
| | Separator part | 3003 plate | | | | |
| | Tubular member | Extruded multi-hole tube | | | | |
| 33 | Header part, tank part, and cap part | B8 | 3 min | D | D | |
| | Separator part | 3003 plate | | | | |
| | Tubular member | Extruded multi-hole tube | | | | |
| 34 | Header part, tank part, and cap part | B14 | 12 min | - | - | Cracks occurred during plate manufacture |
| | Separator part | 3003 plate | | | | |
| | Tubular member | Extruded multi-hole tube | | | | |
| 35 | Header part, tank part, and cap part | B23 | 12 min | D | D | |
| | Separator part | 3003 plate | | | | |
| | Tubular member | Extruded multi-hole tube | | | | |
| 36 | Header part, tank part, and cap part | B25 | 12 min | D | D | |
| | Separator part | 3003 plate | | | | |
| 37 | Header part, tank part, and cap part | C1 | 12 min | D | D | |
| | Separator part | 3003 plate | | | | |
| | Tubular member | Shaped plate member | | | | |

As can be understood from Table 5 and Table 6, in test specimen 1 to test specimen 27, the second filler material having a solidus temperature in the above-mentioned specific range was disposed in the interior of the hollow structure 2 prior to performing the brazing process. For that reason, in each of test specimen 1 to test specimen 27, satisfactory fillets F4, F5 could be formed at both the join part 26 between the header part 21 and the tubular member 3 and the join part 25 between the header part 21 and the tank part 22. In addition, although not listed in Table 5 and Table 6, in the test specimens 1-27, satisfactory fillets (fillets F1-F3) could be formed also at the join parts present on the interior side of the hollow structure 2, that is, on the inner-surface side of the join part 24 between the tank main body 20 and the separator part 23, on the inner-surface side of the join part 25 between the header part 21 and the tank part 22, and the like.

In addition, in the test specimens in which the chemical compositions of the cores, the first filler materials, the second filler materials, and the intermediate materials of the clad sheets were within the specific ranges, the sizes of the fillets could be made larger easily and the fillets could be formed evenly.

On the other hand, in test specimen 28 shown in Table 6, because clad sheets were used in which none of the core layer, the first filler-material layer, or the second filler-material layer contains an element, such as Mg, that breaks down the oxide films, scarcely any fillets were formed at the join part 26 between the header part 21 and the tubular members 3 and at the join part 25 between the header part 21 and the tank part 22.

In test specimens 29-33 and test specimens 36-37, the solidus temperature of the second filler-material layer exceeded 570°C, and consequently the fillet of the join part 26 between the header part 21 and the tubular member 3 and the fillet of the join part 25 between the header part 21 and the tank part 22 were discontinuous.

In test specimen 34, the amount of Si in the intermediate material was large, and consequently cracks occurred during rolling of the intermediate material. As a result, a test specimen could not be formed.

In test specimen 35, the amount of Si in the first filler material was small, and consequently the amount of filler was insufficient. As a result, fillets were discontinuous at the join part 26 between the header part 21 and the tubular member 3 and at the join part 25 between the header part 21 and the tank part 22.

## Claims

1. An aluminum-structure manufacturing method comprising:
preparing a clad sheet that: has a multi-layer structure comprising a core composed of an aluminum material, a first filler material composed of an Al-Si alloy and disposed on one side of the core, and a second filler material composed of an Al-Si alloy containing at least one of Cu and Zn and having a solidus temperature of 570°C or less, and that is disposed on the other side of the core; and contains, in at least one layer of the multi-layer structure, an element that breaks down an oxide film;
preparing a tubular member composed of an aluminum material;
manufacturing a hollow structure from the clad sheet, the outer-surface side of the hollow structure being composed of the first filler material and the hollow structure having a through hole into which the tubular member is inserted;
assembling the aluminum structure in which the tubular member is inserted into the through hole and an end part of the tubular member is disposed in the interior of the hollow structure; and
performing a brazing process in which the aluminum structure is heated in an inert-gas atmosphere, and thereby the hollow structure and the tubular member are joined.

2. The aluminum-structure manufacturing method according to claim 1, wherein the core has a chemical composition that contains Mg: 0.2%-1.3% (mass%; likewise, hereinbelow), the remainder being composed of Al and unavoidable impurities.

3. The aluminum-structure manufacturing method according to claim 1 or 2, wherein:
the clad sheet further has an intermediate material disposed between the core and the first filler material; and
the intermediate material has a chemical composition that contains one or two or more selected from the group consisting of Li: 0.05% or more, Be: 0.05% or more, Ba: 0.05% or more, and Ca: 0.05% or more, the remainder being composed of Al and unavoidable impurities.

4. The aluminum-structure manufacturing method according to claim 3, wherein the intermediate material further contains Si: 4%-13%.

5. The aluminum-structure manufacturing method according to claim 3 or 4, wherein the intermediate material further contains at least one among Zn: 0.2%-6% and Cu: 0.1%-3%.

6. The aluminum-structure manufacturing method according to any one of claims 3-5, wherein the intermediate material further contains Mg: 0.2%-6%.

7. The aluminum-structure manufacturing method according to claim 1 or 2, wherein:
the clad sheet further has an intermediate material between the core and the first filler material; and
the intermediate material has a chemical composition that contains Mg: 0.2%-6%, the remainder being composed of Al and unavoidable impurities.

8. The aluminum-structure manufacturing method according to claim 7, wherein the intermediate material further contains Si: 4%-13%.

9. The aluminum-structure manufacturing method according to any one of claims 3-8, wherein the intermediate material further contains Bi: 0.02%-1.2%.

10. The aluminum-structure manufacturing method according to any one of claims 1-9, wherein the first filler material indispensably contains Si: 6%-13% and further contains one or two or more selected from the group consisting of Mg: 0.2%-1.2%, Li: 0.004%-0.1 %, Be: 0.004%-0.1%, and Ca: 0.005%-0.03%.

11. The aluminum-structure manufacturing method according to claim 10, wherein the first filler material further contains Bi: 0.004%-0.2%.

12. The aluminum-structure manufacturing method according to any one of claims 1-11, wherein prior to the brazing process, the hollow structure is etched using an acid or an alkali.
